# EUROPEAN PATENT APPLICATION

(11) **EP 4 411 902 A1**
(43) Date of publication of application: **07.08.2024**
(21) Application number: 22872552.9
(22) Date of filing: 28.07.2022
(51) Int. Cl.: H01M 8/0213, H01M 8/0221, H01M 8/0226

(54) **FUEL CELL SEPARATOR**

(30) Priority: 27.09.2021 JP 2021156637
(71) Applicant: Nisshinbo Chemical Inc., Tokyo 103-8650 (JP)
(72) Inventor: TANNO, Fumio, Chiba-city, Chiba 267-0056 (JP)
(74) Representative: Mewburn Ellis LLP
(86) International application number: PCT/JP2022/029141
(87) International publication number: WO 2023/047796

(57) **Abstract**

A fuel cell separator obtained by molding a composition containing graphite powder and an epoxy resin component containing a main agent, a curing agent, and a curing accelerator, in which the average particle diameter d50 of the graphite powder is 20 to 80 µm, and the average height of the graphite powder measured using a laser microscope is 30 to 70% of the average particle diameter d50, has good bending strength and bending fatigue characteristics even in an environment of 70°C.

## Description

### TECHNICAL FIELD

The present invention relates to a fuel cell separator.

### BACKGROUND ART

One role of the fuel cell separator is to confer each unit cell with electrical conductivity. In addition, separators provide flow channels for the supply of fuel and air (oxygen) to the unit cells and also serve as boundary walls separating the unit cells.

Properties required of a separator thus include high electrical conductivity, high impermeability to gases, chemical stability, heat resistance and hydrophilicity.

Also, in recent fuel cells, heat control during operation is regarded as important and so there is an accompanying need for separators to have a high thermal conductivity.

In this regard, Patent Document 1, for example, discloses a fuel cell separator which, by using a polyphenylene sulfide resin having a given melt flow rate as a binder resin and also using two types of graphite particles of differing average particle sizes--one large and one small, lowers the void fraction of graphite particles within the separator and increases the thermal conductivity and fatigue strength.

Because the separator of Patent Document 1 uses relatively large graphite particles with an average particle size d50 of from 100 to 150 µm as the first graphite particles, it has an excellent thermal conductivity. Yet the flexural strength of this separator at room temperature is from 30 to 36 MPa and so it is greatly lacking in strength.

### PRIOR ART DOCUMENTS

### PATENT DOCUMENTS

Patent Document 1: JP-A 2019-67687

### SUMMARY OF INVENTION

### TECHNICAL PROBLEM

In light of these circumstances, the object of the present invention is to provide a fuel cell separator which has a good flexural strength and good flexural fatigue properties even in a 70°C environment.

### SOLUTION TO PROBLEM

The inventor has conducted intensive investigations in order to achieve the above object, discovering as a result that by using graphite particles having a given average particle size and having an average height within a given range of the average particle size, a fuel cell separator endowed with a good flexural strength and good flexural fatigue properties even at relatively high temperatures can be obtained. This discovery ultimately led to the present invention.

Accordingly, the invention provides:
1. A fuel cell separator which is obtained by molding a composition that includes a graphite powder and an epoxy resin component containing a base resin, a curing agent and a curing accelerator,
   wherein the graphite powder has an average particle size d50 of from 20 to 80 µm and has an average height as measured with a laser microscope that is from 30 to 70% of the average particle size d50;
2. The fuel cell separator of 1 above which, in a three-point bending test performed in accordance with ASTM D790, has a flexural strength in a 70°C environment that is 45 MPa or more;
3. The fuel cell separator of 1 or 2 above which, in a flat flexural fatigue test performed in accordance with ASTM D671, Type A, remains unbroken after 10 million cycles under 20 MPa of stress in a 70°C environment;
4. The fuel cell separator of any one of 1 to 3 above, wherein the base resin is of at least one type selected from the group consisting of cresol novolac-type epoxy resins and biphenyl-type epoxy resins;
5. The fuel cell separator of any one of 1 to 4 above, wherein the curing agent is a novolac-type phenolic resin;
6. The fuel cell separator of any of 1 to 5 above, wherein the curing accelerator includes an imidazole compound having a phenyl group at the 2 position; and
7. The fuel cell separator of any of 1 to 6 above, wherein the separator contains from 25 to 40 parts by weight of the epoxy resin component per 100 parts by weight of the graphite powder.

### ADVANTAGEOUS EFFECTS OF INVENTION

Because the fuel cell separator of the invention uses a graphite powder having an average particle size d50 of from 20 to 80 µm and an average height that is from 30 to 70% of the average particle size d50, the graphite powder packs tightly within the separator. As a result, the separator has an excellent flexural strength and excellent flexural fatigue properties even in a 70°C environment.

### DESCRIPTION OF EMBODIMENTS

The invention is described in detail below.

The fuel cell separator according to the invention is obtained by molding a composition that includes a graphite powder and an epoxy resin component containing a base resin, a curing agent and a curing accelerator. The graphite powder has an average particle size d50 of from 20 to 80 µm and an average height, as measured with a laser microscope, which is from 30 to 70% of the average particle size d50.

In this invention, the average particle size d50 of the graphite powder is from 20 to 80 µm, preferably from 22 to 80 µm, and more preferably from 30 to 80 µm. At an average particle size d50 below 20 µm, the epoxy resin readily covers the surfaces of the graphite particles and the surface area of contact between the particles becomes small, as a result of which the electrical conductivity of the separator itself worsens. On the other hand, at an average particle size d50 greater than 80 µm, the surface area of contact between the graphite particles and the epoxy resin becomes small and so a sufficient mechanical strength cannot be obtained.

The average particle size d50 in this invention is expressed as the median diameter in particle size distribution measurement by the laser diffraction method.

The average height of the graphite particles measured with a laser microscope is from 30 to 70%, preferably from 30 to 68%, and more preferably from 30 to 67%, of the average particle size d50. At an average height relative to the average particle size d50 of less than 30%, because the graphite powder orients more easily in the thickness direction during molding of the separator, a sufficient mechanical strength cannot be obtained. At an average height that is greater than 70% of the average particle size d50, voids between the graphite particles during molding of the separator become larger, and so satisfactory fatigue properties cannot be obtained.

The average height of the graphite powder in the invention is determined by placing 10 to 20 mg of graphite powder on a glass plate, using the VK-X100 laser microscope from Keyence Corporation to scan the graphite powder on the plate with an objective lens (NA = 0.55) having a magnification of 50×, and then determining graphite powder particle heights by profile measurement with the dedicated analysis application VK-H1XA from Keyence Corporation. The average height is the average value for 50 randomly selected particles.

The graphite powder used in the invention is not particularly limited as to the type, etc. thereof, provided that overall it satisfies the above-described average particle size d50 and average height relative to the average particle size. Either a natural graphite or a synthetic graphite may be used.

Synthetic graphite powders suitably selected from among those employed to date in fuel cell separators may be used. Specific examples include synthetic graphite obtained by firing needle coke and synthetic graphite obtained by firing bulk graphite.

Similarly, natural graphite powders suitably selected from among those employed to date in fuel cell separators may be used. Specific examples include vein natural graphite and flake natural graphite.

These graphite powders may be used singly or two or more may be used in combination. When used singly, a graphite powder within the particle size range specified in this invention may be suitably selected. When two or more graphite powders are used in combination, the mixed graphite powder thereof should have a particle size within the range specified in this invention. Different graphite powders, each having a particle size within the range specified in this invention, may be used in combination, or a graphite powder outside of the particle size range specified in this invention may be combined with another graphite powder and used as a mixed graphite powder having a particle size within the range specified in this invention.

The base resin within the epoxy resin component is not particularly limited, provided that it has epoxy groups. Examples include o-cresol novolac-type epoxy resins, phenolic novolac-type epoxy resins, bisphenol A-type epoxy resins, bisphenol F-type epoxy resins, biphenyl-type epoxy resins, biphenyl aralkyl-type epoxy resins, bisphenol-type epoxy resins, brominated epoxy resins, dicyclopentadiene-type epoxy resins and biphenyl novolac-type epoxy resins. These may be used singly or two or more may be used in combination. Of these, an o-cresol novolac-type epoxy resin alone, a biphenyl-type epoxy resin alone, or mixtures of these are preferred.

The epoxy equivalent weight of the epoxy resin used in the invention, although not particularly limited, is preferably from 180 to 209 g/eq.

The curing agent is preferably a phenolic resin. Specific examples include novolac-type phenolic resins, cresol novolac-type phenolic resins, resole-type phenolic resins, aralkyl-modified phenolic resins, biphenyl novolac-type phenolic resins and tris(phenol methane)-type phenolic resins. These may be used singly or two or more may be used in combination. Of these, a novolac-type phenolic resin is preferred.

The hydroxyl equivalent weight of the phenolic resin used in the invention, although not particularly limited, is preferably from 95 to 140 g/eq, and more preferably from 100 to 115 g/eq.

The curing accelerator is not particularly limited, so long as it is an agent which promotes reactions between epoxy groups and the curing agent. Examples include phosphine compounds, amine compounds and imidazole compounds. Of these, the use of an imidazole compound having an aryl group at the 2 position is preferred. Specific examples of the aryl group include phenyl, tolyl and naphthyl groups; a phenyl group is preferred. Specific examples of imidazole compounds having an aryl group at the 2 position include 2-phenylimidazole and 2-phenyl-4-methylimidazole.

In addition to the above ingredients, optional ingredients such as an internal mold release agent may be suitably included in the composition used in this invention.

The internal mold release agent is suitably selected from various types of internal mold release agents that have hitherto been used in molding separators. Specific examples include stearic acid wax, amide wax, montanic acid wax, carnauba wax and polyethylene wax. These may be used singly or two or more may be used in combination.

The amount of epoxy resin component (base resin, curing agent and curing accelerator) included in the composition used in the invention, although not particularly limited, is preferably from 10 to 50 parts by weight, and more preferably from 20 to 40 parts by weight, per 100 parts by weight of the graphite powder.

In this case, it is preferable to include from 0.98 to 1.08 equivalent, and more preferable to include from 0.99 to 1.05 equivalent, of the curing agent with respect to the base resin.

The amount of curing accelerator used, although not particularly limited, is preferably from 0.1 to 5 parts by weight, and more preferably from 0.5 to 2 parts by weight, per 100 parts by weight of the mixture of the base resin and the curing agent.

In addition, when an internal mold release agent is used, the amount thereof, although not particularly limited, is preferably from 0.01 to 3.0 parts by weight, and more preferably from 0.05 to 1.5 parts by weight, per 100 parts by weight of the graphite powder.

The composition used in this invention may be prepared by, for example, mixing together the graphite powder, the base resin, the curing agent and the curing accelerator in any order and in given ratios. The mixer used at this time may be, for example, a planetary mixer, a ribbon blender, a Loedige mixer, a Henschel mixer, a rocking mixer or a Nauta mixer.

When an internal mold release agent is used, it too may be included in any order.

The fuel cell separator of the invention is preferably obtained by placing the composition in a predetermined mold and compression molding the composition. The mold used is exemplified by a mold for fuel cell separator production which is capable of forming grooves that serve as gas flow channels at the surface of the molded body on one or both sides thereof.

The compression molding conditions are not particularly limited, although the mold temperature is typically between 150°C and 190°C, and the molding pressure is typically from 30 to 60 MPa, preferably from 30 to 50 MPa.

The compression molding time is not particularly limited, although it may be suitably set to from about 3 seconds to about one hour.

After compression molding, from about 1 minute to about 600 minutes of heating at between 150°C and 200°C may be carried out to accelerate hot curing.

In this invention, the fuel cell separator (molded body) obtained by compression molding may be subjected to roughening treatment for such purposes as skin removal and adjustment of the surface roughness.

The method of roughening treatment is not particularly limited, and may be suitably selected from various known roughening methods such as blasting and surface grinding. Air blasting, wet blasting, barrel grinding and brush grinding are preferred, blasting using an abrasive is more preferred, and wet blasting is still more preferred.

The average particle size (d = 50) of the abrasive used in blasting is preferably from 3 to 30 µm, more preferably from 4 to 25 µm, and even more preferably from 5 to 20 µm.

The material making up the abrasive used in blasting is not particularly limited, although it is preferable to use, for example, alumina, silicon carbide, zirconia, glass, nylon or stainless steel. These may be used singly, or two or more may be used in combination.

The discharge pressure during wet blasting varies depending on factors such as the particle size of the abrasive and so cannot be strictly specified, although the pressure is preferably from 0.1 to 1 MPa, and more preferably from 0.15 to 0.5 MPa.

The fuel cell separator of the invention, in a three-point bending test performed in accordance with ASTM D790, has a flexural strength in a 70°C environment that is preferably 45 MPa or more and, in a flat flexural fatigue test performed in accordance with ASTM D671 Type A, preferably remains unbroken after 10 million cycles under 20 MPa of stress in a 70°C environment.

In the above three-point bending test, the flexural strength in a 23°C environment is preferably 55 MPa or more.

Fuel cells equipped with the inventive fuel cell separator having such flexural strength and flexural fatigue properties are able to maintain a stable power generating efficiency over a long period of time.

A solid polymer fuel cell is generally composed of a stack of many unit cells, each of which is constructed of a solid polymer membrane disposed between a pair of electrodes that are in turn sandwiched between a pair of separators which form flow channels for the supply and removal of gases. The fuel cell separator of the invention may be used as some or all of the plurality of separators in the fuel cell.

### EXAMPLES

Examples of the invention and Comparative Examples are given below by way of illustration, although the invention is not limited by these Examples. The properties in the Examples were measured by the following methods.

### [1] Average Particle Size d50 of Graphite Powder

The median diameter was measured by the laser diffraction method using a particle size analyzer (MT3000, from Nikkiso Co., Ltd.).

### [2] Average Height of Graphite Powder

Between 10 and 20 mg of graphite powder was placed on a glass plate. The graphite powder on the glass plate was scanned with an objective lens (NA = 0.55) having a magnification of 50× using the VK-X100 laser microscope from Keyence Corporation, and particle heights of the graphite powder were determined by profile measurement with the dedicated analysis application VK-H1XA from Keyence Corporation. The average value for 50 randomly selected particles was determined and treated as the average height.

### [3] Flexural Strength

The flexural strengths in 23°C and 70°C environments were measured by the three-point bending test performed in accordance with ASTM D790.

### [4] Flexural Fatigue

### (1) Fabrication of Test Specimens

Test specimens were produced by machining fuel cell separators (flat plates) having a thickness of 2 mm to an ASTM D671 type A shape.

### (2) Flexural Fatigue Measurement

Using a repeated vibration fatigue tester (B50, from Toyo Seiki Seisaku-sho, Ltd.), the number of cycles until the test specimen broke when subjected to vibrations at a frequency of 30 Hz under 20 MPa of stress in a 70°C environment was measured (maximum, 10 million cycles).

### [Example 1]

A composition was prepared by charging a Henschel mixer with 100 parts by weight of Graphite Powder 1 (synthetic graphite; average particle size d50, 23 µm; average height, 8 µm) and an epoxy resin component consisting of 20.4 parts by weight of epoxy resin (an o-cresol novolac-type epoxy resin available as EOCN-1020-65 from Nippon Kayaku Co., Ltd.; epoxy equivalent weight, 198 g/eq), 10.7 parts by weight of phenolic resin (a novolac-type phenolic resin available as Shonol BRG-566 from Aica SDK Phenol Co., Ltd.; hydroxyl equivalent weight, 103 g/eq) and 0.25 part by weight of 2-phenylimidazole (2PZ, from Shikoku Chemicals Corporation), and mixing these ingredients together for 3 minutes at 800 rpm.

The resulting composition was charged into a mold for producing fuel cell separators and compression-molded at a mold temperature of 185°C, a molding pressure of 36.6 MPa and a molding time of 9 seconds, thereby giving a dense molded body with dimensions of 240 mm × 240 mm × 2 mm and having gas flow channels.

Next, the entire surface of the resulting dense molded body was subjected to roughening treatment by wet blasting using alumina abrasive grit (average particle size d50, 6 µm) under the following conditions: discharge pressure, 0.25 MPa; transport speed, 1.5 m/min, thereby obtaining a fuel cell separator.

### [Example 2]

Aside from changing Graphite Powder 1 to Graphite Powder 2 (synthetic graphite; average particle size d50, 35 µm; average height, 23 µm), a fuel cell separator was obtained in the same way as in Example 1.

### [Example 3]

Aside from changing Graphite Powder 1 to Graphite Powder 3 (synthetic graphite; average particle size d50, 50 µm; average height, 15 µm), a fuel cell separator was obtained in the same way as in Example 1.

### [Example 4]

Aside from changing Graphite Powder 1 to Graphite Powder 4 (synthetic graphite; average particle size d50, 80 µm; average height, 25 µm), a fuel cell separator was obtained in the same way as in Example 1.

### [Example 5]

Aside from changing Graphite Powder 1 to Graphite Powder 5 (synthetic graphite; average particle size d50, 50 µm; average height, 30 µm), a fuel cell separator was obtained in the same way as in Example 1.

### [Example 6]

Aside from changing Graphite Powder 1 to Graphite Powder 6 (synthetic graphite; average particle size d50, 80 µm; average height, 44 µm), a fuel cell separator was obtained in the same way as in Example 1.

### [Example 7]

Aside from changing the 100 parts by weight of Graphite Powder 1 to a mixed powder consisting of 70 parts by weight of Graphite Powder 2 and 30 parts by weight of Graphite Powder 3 (average particle size d50 of mixed powder, 41 µm; average height, 20 µm), a fuel cell separator was obtained in the same way as in Example 1.

### [Example 8]

Aside from changing the 100 parts by weight of Graphite Powder 1 to a mixed powder consisting of 70 parts by weight of Graphite Powder 1 and 30 parts by weight of Graphite Powder 4 (average particle size d50 of mixed powder, 39 µm; average height, 12 µm), a fuel cell separator was obtained in the same way as in Example 1.

### [Comparative Example 1]

Aside from changing Graphite Powder 1 to Graphite Powder 7 (synthetic graphite; average particle size d50, 18 µm; average height, 3 µm), a fuel cell separator was obtained in the same way as in Example 1.

### [Comparative Example 2]

Aside from changing Graphite Powder 1 to Graphite Powder 8 (synthetic graphite; average particle size d50, 100 µm; average height, 10 µm), a fuel cell separator was obtained in the same way as in Example 1.

### [Comparative Example 3]

Aside from changing Graphite Powder 1 to Graphite Powder 9 (synthetic graphite; average particle size d50, 50 µm; average height, 40 µm), a fuel cell separator was obtained in the same way as in Example 1.

### [Comparative Example 4]

Aside from changing the 100 parts by weight of Graphite Powder 1 to a mixed powder consisting of 70 parts by weight of Graphite Powder 1 and 30 parts by weight of Graphite Powder 7 (average particle size d50 of mixed powder, 21 µm; average height, 4 µm), a fuel cell separator was obtained in the same way as in Example 1.

The flexural strength (23°C, 70°C) and flexural fatigue at 70°C were measured and evaluated for the fuel cell separators obtained in Examples 1 to 8 and Comparative Examples 1 to 4. The results are shown in Table 1. In Table 1, the numerical values within parenthesis for Comparative Examples 1 to 4 in the flexural fatigue evaluations represent the number of cycles at break. For example, "0.81" in Comparative Example 1 stands for 0.81×10⁷ (8,100,000) cycles.

**[Table 1]**

| | Example | | | | | | | | Comparative Example | | | |
|---|---|---|---|---|---|---|---|---|---|---|---|---|
| | 1 | 2 | 3 | 4 | 5 | 6 | 7 | 8 | 1 | 2 | 3 | 4 |
| Graphite Powder 1 | 100 | | | | | | | 70 | | | | 70 |
| Graphite Powder 2 | | 100 | | | | | 70 | | | | | |
| Graphite Powder 3 | | | 100 | | | | 30 | | | | | |
| Graphite Powder 4 | | | | 100 | | | | 30 | | | | |
| Graphite Powder 5 | | | | | 100 | | | | | | | |
| Graphite Powder 6 | | | | | | 100 | | | | | | |
| Graphite Powder 7 | | | | | | | | | 100 | | | 30 |
| Graphite Powder 8 | | | | | | | | | | 100 | | |
| Graphite Powder 9 | | | | | | | | | | | 100 | |
| Average particle size d50 (µm) | 23 | 35 | 50 | 80 | 50 | 80 | 41 | 39 | 18 | 100 | 50 | 21 |
| Average height (µm) | 8 | 23 | 15 | 25 | 30 | 44 | 20 | 12 | 3 | 10 | 40 | 4 |
| Height/Particle size (%) | 35 | 66 | 30 | 31 | 60 | 55 | 49 | 30 | 17 | 10 | 80 | 19 |
| Flexural strength @ 23°C (MPa) | 57 | 66 | 56 | 56 | 61 | 58 | 62 | 56 | 48 | 45 | 51 | 52 |
| Flexural strength @ 70°C (MPa) | 46 | 53 | 45 | 45 | 50 | 47 | 51 | 45 | 38 | 36 | 40 | 41 |
| Flexural fatigue @ 70°C (20 MPa, 10⁷ cycles) | unbroken | unbroken | unbroken | unbroken | unbroken | unbroken | unbroken | unbroken | broken (0.81) | broken (0.74) | broken (0.91) | broken (0.93) |

As shown in Table 1, because the fuel cell separators produced in Examples 1 to 8 use as the graphite powder or graphite mixed powder therein a powder having an average particle size d50 of from 20 to 80 µm and an average height in the range of 30 to 70% of the average particle diameter d50, compared with the fuel cell separators produced in Comparative Examples 1 to 4, they have an excellent flexural strength and excellent flexural fatigue properties even in a 70°C environment.

## Claims

1. A fuel cell separator which is obtained by molding a composition comprising a graphite powder and an epoxy resin component containing a base resin, a curing agent and a curing accelerator,
wherein the graphite powder has an average particle size d50 of from 20 to 80 µm and has an average height as measured with a laser microscope that is from 30 to 70% of the average particle size d50.

2. The fuel cell separator of claim 1 which, in a three-point bending test performed in accordance with ASTM D790, has a flexural strength in a 70°C environment that is 45 MPa or more.

3. The fuel cell separator of claim 1 or 2 which, in a flat flexural fatigue test performed in accordance with ASTM D671, Type A, remains unbroken after 10 million cycles under 20 MPa of stress in a 70°C environment.

4. The fuel cell separator of any one of claims 1 to 3, wherein the base resin is of at least one type selected from the group consisting of cresol novolac-type epoxy resins and biphenyl-type epoxy resins.

5. The fuel cell separator of any one of claims 1 to 4, wherein the curing agent is a novolac-type phenolic resin.

6. The fuel cell separator of any one of claims 1 to 5, wherein the curing accelerator includes an imidazole compound having a phenyl group at the 2 position.

7. The fuel cell separator of any one of claims 1 to 6, wherein the separator contains from 25 to 40 parts by weight of the epoxy resin component per 100 parts by weight of the graphite powder.
